(19) Europäisches Patentamt
European Patent Office
Office européen des brevets

(11) **EP 2 142 810 B1**

(12) **EUROPÄISCHE PATENTSCHRIFT**

(45) Veröffentlichungstag und Bekanntmachung des Hinweises auf die Patenterteilung:
**21.08.2013 Patentblatt 2013/34**

(21) Anmeldenummer: 08749203.9

(22) Anmeldetag: **28.04.2008**

(51) Int Cl.:
*F15B 15/28* ^(2006.01)     *G01B 7/14* ^(2006.01)

(86) Internationale Anmeldenummer:
**PCT/EP2008/003437**

(87) Internationale Veröffentlichungsnummer:
**WO 2008/131957 (06.11.2008 Gazette 2008/45)**

(54) **ABSTANDSMESSVORRICHTUNG UND VERFAHREN ZUR BESTIMMUNG EINES ABSTANDS UND EIN GEEIGNETER REFLEXIONSKÖRPER**

DISTANCE MEASURING DEVICE AND METHOD FOR DETERMINING A DISTANCE AND SUITABLE REFLECTING BODY

DISPOSITIF DE MESURE DE DISTANCE, PROCÉDÉ POUR DÉTERMINER UNE DISTANCE ET CORPS RÉFLÉCHISSANT APPROPRIÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **27.04.2007 DE 102007020046**

(43) Veröffentlichungstag der Anmeldung:
**13.01.2010 Patentblatt 2010/02**

(73) Patentinhaber: **Astyx GmbH**
**85521 Ottobrunn (DE)**

(72) Erfinder:
• **TRUMMER, Guenther**
**91083 Baiersdorf (DE)**
• **HÖHNE, Felix**
**85609 Aschheim (DE)**

(74) Vertreter: **Kunz, Herbert et al**
**Dr. Kunz & Kollegen**
**Patentanwaltskanzlei**
**Elisabethstraße 91**
**80797 München (DE)**

(56) Entgegenhaltungen:
**DE-A1- 10 205 904     DE-A1-102006 038 469**
**US-A- 4 588 953**

**Beschreibung**

Die vorliegende Erfindung betrifft eine Abstandsmessvorrichtung nach dem Oberbegriff des Anspruchs 1 sowie ein Verfahren zur Bestimmung eines Abstands und einen geeigneten Reflexionskörper.

Unter anderem werden herkömmliche Abstandsmessvorrichtungen beispielsweise zur Detektion der Kolbenposition von fluidischen Linearantrieben bzw. pneumatische und hydraulische Zylinder eingesetzt. Die Kolbenpositionserfassung an Zylindern kann sowohl diskret, d. h. an diskreten Stellen, als auch kontinuierlich, d. h. ständig während des Betriebs, erfolgen.

Eine diskrete Kolbenpositionsbestimmung wird in der Regel benötigt, um die Ausführung bzw. Beendigung einer Kolbenbewegung an eine Ablaufsteuerung (z. B. SPS) zurückzumelden, um somit beispielsweise den nächsten Ablaufschritt einleiten zu können.

Hierzu werden überwiegend magnetfeldempfindliche Sensoren bzw. Sensoreinrichtungen verwendet, welche das Magnetfeld eines Permanentmagneten, der sich an dem Zylinderkolben befindet, detektieren. Die dabei eingesetzten Sensoren werden extern an das Zylinderrohr des Kolbenzylinders montiert. Bewegt sich der Kolben in den Erfassungsbereich eines solchen Sensors, so erkennt dieser die Anwesenheit des Zylinderkolbens, durch das Zylinderrohr hindurch. Hierfür ist überwiegend die Verwendung von nicht ferromagnetischen Werkstoffen erforderlich und beschränkt somit die konstruktiven Eigenschaften bzw. Anwendungen des Antriebes.

Soll hingegen eine andere Position des Kolbens detektiert werden, so muss der Sensor entsprechend mechanisch justiert werden. Für jede zusätzlich zu erfassende Position muss folglich ein weiterer Sensor montiert werden, und zwar mit den damit verbundenen zusätzlichen Material-, Montage-, Justage- und Installationskosten. Dies geschieht in der Regel vor Ort beim Kunden. Oft ist dabei der Zylinder bereits in eine schwer zugängliche Maschine eingebaut und die Einstellung der Schaltabstände durch mechanisches Verschieben der extern montierten Magnetschalter ist nicht mehr möglich.

Ferner wird für diese extern angebauten Sensoren zusätzlicher Einbauraum benötigt. Damit die Zugänglichkeit und Robustheit des Sensors gewährleistet werden kann, ist häufig zusätzlicher konstruktiver Aufwand erforderlich.

Diese Art von Sensoren sind überwiegend als magnetfeldempfindliche Sensoren ausgeführt und sind als Reed-Schalter, magnetoresistive (MR), giant magnetoresistive (GMR), Hall-Schalter oder magnetinduktive Näherungsschalter bekannt.

Durch die Detektion des Magnetfeldes ist eine aufwendige Abstimmung des Magneten auf die Sensoreinrichtung erforderlich. Zudem werden durch dieses Messprinzip die möglichen Anwendungen durch störende statische und dynamische Magnetfelder (EMV, Feld eines nahen Zylinders) sowie das Temperaturverhalten des Sensors beschränkt.

Zur kontinuierlichen Kolbenpositionsmessung werden gewöhnlich Meßsysteme verwendet, die potentiometrisch, nach dem LVDT -Prinzip (Linear Variable Differential Transformer) magnetostriktiv oder nach dem Ultraschall-Prinzip arbeiten. Die Kolbenposition wird bei diesen Systemen kontinuierlich und überwiegend als analoges Spannungssignal ausgegeben. Sensoren nach dem LVDT-Prinzip benötigen beim Einschalten immer eine Referenzfahrt. Magnetostriktive Sensoren werden entweder extern an den Zylinder oder in eine hohle Kolbenstange montiert. Beide Montagemöglichkeiten bedeuten einen erheblichen Mehraufwand, sind störanfällig bzw. schwächen im Falle der hohlen Kolbenstange die Stabilität des Antriebs. Ultraschallsensoren sind für die Wegmessung in Pneumatik- und Hydraulikzylindern nur bedingt geeignet, da die Messgenauigkeit sich mit dem Zylinderdruck ändert. Als Ergänzung zu diesen Systemen sind auch inkrementale Wegmessungen bekannt. Diese Systeme werden beispielsweise durch die Kodierung der Kolbenstange realisiert und können somit nur zur relativen Wegmessung verwendet werden.

Sowohl die kontinuierliche als auch die diskrete Kolbenpositionsbestimmung können nicht bzw. nur mit erheblichem konstruktiven Aufwand und den dadurch verbundenen hohen Kosten in einen Zylinder integriert werden. Der erhebliche konstruktive Aufwand begründet sich dadurch, dass alle beschriebenen gängigen Sensorprinzipien auf die entsprechende Zylinderlänge angepasst werden müssen, da sie einen zu kurzen Erfassungsbereich besitzen.

Das ideale Wegmesssystem zur Bestimmung der Kolbenposition in Pneumatik- und Hydraulikzylindern besitzt folgende Eigenschaften:

- kontinuierliche, absolute Wegmessung mit einer Genauigkeit von $100 \mu m$ zum Positionieren des Kolbens
- vollständige Integration des Sensors mit Auswerteelektronik in den Deckel des Zylinders
- Schaltabstände sollen extern über eine elektronische Schnittstelle einstellbar sein (Teach-in Fähigkeit)
- Universell einsetzbarer Sensor, unabhängig von der Zylinderlänge
- Messergebnisse unabhängig vom Druck, Öl und Feuchtigkeit im Zylinder
- Zuverlässige Messergebnisse z. B. bis 10 bar Druck und 6m/sec Kolbengeschwindigkeit im Pneumatikzylinder

Ein weiterer Stand der Technik ist in der Patentanmeldung Nr. 102 05 904.7 beschrieben.

Die in der Patentanmeldung beschriebene Messanordnung besitzt für Zylinder mit großem Durchmesser (>50 mm) in der Praxis nachfolgende Probleme:

- Der Kunststoffring für den Kolbenanschlag und die Antennenhalterung wird sehr groß. Diese Kunststoffteile sind nur bis zu einem Durchmesser von max. 60 mm als Stangenware erhältlich. Für größere Durchmesser sind teure Spezialanfertigungen erforderlich. Zudem nimmt Kunststoff im Laufe der Zeit Wasser auf bzw. gibt je nach Einsatzbedingungen Wasser ab und verändert dadurch die Messbedingungen. Die Messergebnisse werden dann ungenau und entsprechen nicht mehr der Spezifikation.
- Eine klassische Endlagendämpfung z. B. des Pneumatikkolbens lässt sich durch den bewegten Bremsring aus Kunststoff nur unter Verlust von Messgenauigkeit erreichen.

Weitere Nachteile der in der Patentanmeldung Nr. 102 05 904.7 beschriebenen Messanordnung sind; dass

- die herkömmliche Kolben in Pneumatikzylinder relativ dünn sind und in der Regel mittig einen Magnetring besitzen, um den Betrieb mit extern montierten Reed Schaltern zu ermöglichen. Diese Kolben bilden für eine elektromagnetische Welle keinen idealen Reflexionskörper. Ein Teil der elektromagnetischen Welle gelangt über den Kolben hinweg in den dahinter liegenden Funktionsraum des Zylinders, kommt zeitverzögert zurück und überlagert sich dem Nutzsignal. Dadurch verschlechtert sich die Messgenauigkeit erheblich. Des weiteren existieren Kolben die komplett in Kunststoff realisiert sind. Diese Kolben stellen für die elektromagnetische Welle überhaupt keinen Reflexionskörper dar. Das in obiger Patentanmeldung beschriebene Verfahren funktioniert dann überhaupt nicht mehr.
- Ferner hat ein Kolbenanschlag im Deckel aus Kunststoff den Nachteil, dass durch häufiges Auftreffen des Kolbens sich der Kunststoff setzt und sich damit die physikalischen Bedingungen im Funktionsraum des Deckels für den Hochfrequenzsensor ändern. Die Messgenauigkeit verschlechtert sich außerdem.
- Zusätzlich ist es bei kleineren Zylinderdurchmessern sehr schwierig, die diskrete Elektronik in den Zylinderdeckel zu integrieren. Ein Teil der Elektronik muss dann aufwendig extern, z. B. auf der Zylinderwand untergebracht werden.

Aus US 4,588,953 ist eine gattungsgemäße Vorrichtung zur Positionsbestimmung eines Kolbens in einem Pneumatikzylinder bekannt. Während der Bewegung des Kolbens wird ein Mikrowellensignal in den Hohlraum abgegeben, welcher von der Zylinderaußenwand und dem Kolben begrenzt ist. Das reflektierte Mikrowellensignal wird empfangen und zur Bestimmung der Position des Kolbens verarbeitet.

Aufgabe der vorliegenden Erfindung ist es somit, eine Abstandsmessvorrichtung, einen Reflexionskörper und ein Verfahren zur Bestimmung des Abstands zu schaffen, welche bzw. welches die oben aufgeführten Nachteile überwinden und eine kontinuierliche und somit diskretisierbare Abstandsbestimmung, eine einfache Handhabung und vielseitige Einsatzmöglichkeiten erlauben.

Diese Aufgabe wird vorrichtungstechnisch mit den Merkmalen des Anspruchs 1 und 39 und verfahrenstechnisch mit den Merkmalen des Anspruchs 30 gelöst.

Anmeldungsgemäß wird anhand der geometrischen Ausgestaltung des Reflexionskörpers erreicht, dass die Koppelsonde beim Ausschlag des Reflexionskörpers berührungslos im Innern des Reflexionskörpers, insbesondere in den Kragen, eintaucht. Ein Verstellen der Position der Koppelsonde wird verhindert und die Messgenauigkeit beibehalten. Durch Vorhandensein des Kragens wird erreicht, dass der Abbremsvorgang des Reflexionskörpers mit einem Kunststoffring bewerkstelligt wird, der die Abstandsmessung nicht beeinflusst, da der Kunststoffring nicht innerhalb des Reflexionskörpers vorliegt.

Erfindungsgemäß wird ferner eine Leitungsstruktur bereitgestellt, die einen Einspeiseblock mit einem Einspeisungsbereich aufweist, der einen HF-Transceiver über einen Wellenleiter mit dielektrischen Haltesystemen mit der Koppelsonde verbindet. Mit dieser anmeldungsgemäßen Anordnung ist eine vollständige Integration der Koppelsonde mit der Auswerteelektronik in dem Deckel des Zylinders möglich. Zusätzliche extern zu montierende Teile sind somit nicht notwendig. Die entsprechenden Schaltabstände können über eine elektronische Schnittstelle extern vorzugsweise über die Auswerteelektronik eingestellt werden. Grundsätzlich ist die anmeldungsgemäße Abstandsmessvorrichtung unabhängig von der Zylinderlänge universell einsetzbar. Es hat sich darüber hinaus gezeigt, dass die Messergebnisse unabhängig vom Druck, Öl und der Luftfeuchtigkeit im Zylinder zuverlässig stimmen.

Erfindungsgemäß wird eine Abstandsmessvorrichtung und ein Verfahren zur Bestimmung eines Abstands zur Verfügung gestellt, wobei die Sensoreinrichtung ein Hochfrequenz-Einspeisesystem aufweist, das dazu dient, durch Abstrahlen und Empfangen von Wellen, einen bestimmten Abstand beispielsweise in einer Leitungsstruktur (Leitungsstruktur ist z.B. der Innenraum des Pneumatikzylinders = Rundhohlleiter) auszumessen, indem beispielsweise das Einspeisesystem in die Leitungsstruktur integriert wird. Aufgrund dieser Integration des Einspeisesystems wird erreicht, dass die Abstandsmessvorrichtung klein baut und nahezu keine bzw. geringe Umbaumaßnahmen erforderlich macht. Der gesamte Aufbau der anmeldungsgemäßen Abstandsvorrichtung kann somit ein sauberes, glattes Design aufgrund des Wegfalls einer Montagemöglichkeit für externe Sensoreinrichtungen aufweisen, bzw. beeinflusst die äußere Erscheinung nicht. Mit der anmeldungsgemäßen Abstandsmessvorrichtung wird eine Installationsersparnis erreicht, da der vorgefertigte Zylinder lediglich ein Anschlusskabel zur Ansteuerung und Datenerfassung aufweist. Gemäß dem anmeldungsgemäßen Verfahren wird die Länge der Leitungsstruktur bis zu einem Kurzschluss, (z. B. Kolben als Reflexionskörper beim Pneumatik- und Hydraulikzylinder) der auch verschiebbar ist, gemessen. Das entsprechend dem anmeldungsgemäßen Verfahren bereitgestellte Sendesignal wird in eine Leitungsstruktur eingespeist und vorzugsweise durch einen Kurzschluss (= Zylinderkolben) reflektiert. Dadurch wird die Messung des Abstandes zwischen dem von der Koppelsonde definierten Einspeisepunkt und dem Kurzschluss der Leitungsstruktur durchgeführt. Der zu messende Abstand erfolgt hierbei durch Messung der Phasendifferenz zwischen Sende- und Empfangssignal.

Konkret sieht die Anordnung wie folgt aus:

Das RF-Einspeisesystem besteht aus einem koaxialen Monopol-Anregungssystem. Durch Einspeisung einer transversal elektromagnetischen Welle (TEM-Welle) im koaxialen Eingangsbereich (3) wird durch das Monopolsystem eine Rundhohlleiterwelle mit dem charakteristischen E-Feldtyp der E01-Welle angeregt. Diese Welle breitet sich innerhalb des Laufzylinders in axialer Richtung aus. Trifft diese Welle auf einen Reflexionskörper (im Pneumatik- und Hydraulikzylinder den Kolben), wird die Welle reflektiert und über die Anregungssektion (Monopol) in das koaxiale Leitungssystem konvertiert und weitergeführt. Die Monopoleinspeisung besteht aus einer 3-stufigen koaxialen Transformationsstufe (2) mit einem dielektrischen Haltesystem (1), vorzugsweise aus PPS Gf 40 Material, zur Positionierungs- und Druckstabilisierung.

Bei Zylindern mit großem Durchmesser kann das dielektrische Haltesystem nur partiell in Form von dielektrischen Stützen ausgeführt werden. Der Kolbenendanschlag ist durch eine Grundplatte mit aufgesetztem Kragen zur Ausbildung eines becherförmigen Teils (3) aus Aluminium realisiert, welches als Endstück am Kolben montiert wird. Dabei wird der Becher so ausgeführt, dass die Antenne beim Anschlag berührungslos im Inneren des Bechers eintaucht. Auf der Stirnseite des Bechers ist eine Kunststofflamelle untergebracht um einen sanften Anschlag zu ermöglichen. Dieser Becher dient zusätzlich als Reflexionskörper für die gesendete elektromagnetische Welle. Um ideale Reflexionsbedingungen zu erreichen wurden am Umfang des Reflexionskörpers so genannte "Corregations" (8) realisiert. Dabei handelt es sich um eingefräste Rillen, die für die elektromagnetische Welle einen Kurzschluss darstellen. Je nach Anzahl der Rillen kann damit ein nahezu perfekter Kurzschluss realisiert werden. In der Praxis genügen 2 Rillen. Die Tiefe der Rillen entsprechen einem Viertel der Wellenlänge der verwendeten Sendefrequenz der elektromagnetischen Welle. Eine weitere vorteilhafte Ausführung des Reflexionskörpers besteht darin, dass er so ausgestaltet werden kann um die Funktion einer Endlagendämpfung zu realisieren. Ohne Endlagendämpfung würde der Kolben ungebremst auf den Deckel auftreffen. Dies führt zu Erschütterungen und kann Beschädigungen am Antriebssystem verursachen. Die klassische Endlagendämpfung wird dadurch realisiert, dass die Kolbenstange über den Kolben in Richtung Sensor hinausragt und mit einem konisch zulaufenden Kunststoffaussatz versehen wird. Das Gegenstück im Enddeckel bildet ein Kunststoffring dessen Innendurchmesser gerade so groß ist, dass die Kolbenstange mit konisch zulaufendem Kunststoffaufsatz eintauchen kann. Entspricht der Innendurchmesser des Kunststoffrings jenem des Außendurchmessers des konischen Kolbenstangenaufsatzes, dann wird der Kolben abgebremst. Um dem Zylinder nach einem Abbremsvorgang eine sanfte Anfahrt zu ermöglichen wird der Kunststoffring im Deckel so gelagert, dass er sich z.B. einige Millimeter axial bewegen kann. Fährt der Kolben nach einem Abbremsvorgang wieder an, dann nimmt er den Kunststoffring bis zu dessen Anschlag mit. Durch die kinetische Energie, die der Kolben dann besitzt, kommt es zu einem sanften Ruck und der Kunststoffring löst sich vom konischen Kunststoffaufsatz der Kolbenstange. Unterstützt wird der Abbremsvorgang durch einen mittels Schraube einstellbaren Luftaustausch zwischen Deckel- und Zylinderraum. Der Nachteil für das HF Wegmesssystem besteht darin, dass die Bewegung des Kunststoffrings im Deckelraum die physikalischen Verhältnisse für den Sensor ändert und sich dadurch die Messgenauigkeit wesentlich verschlechtert. Grundsätzlich lässt sich die klassische Endlagendämpfung auch bei der vorgeschlagenen Konfiguration realisieren. Der Kunststoffring sitzt im Deckel und die konische Verlängerung der Kolbenstange wird am Reflexionskörper realisiert. Der Vorteil dieser Lösung besteht darin, dass jetzt die Bewegung des Kunststoffrings durch den Becher maskiert wird, d.h. die Sensorsignale durch das Eintauchen der Antenne in den Becher durch die Bewegung des Kunststoffrings nicht mehr gestört werden. Eine ebenso vorteilhafte Ausführung wird erreicht, wenn das Wirkschema umgedreht wird. Der bewegliche Kunststoffring wird jetzt auf der Außenfläche des Bechers montiert und die Deckeleintauchfläche konisch ausgeführt und kunststoffbeschichtet. Die Bewegung des Rings auf dem Reflexionskörper beeinflusst die elektromagnetische Welle nicht, da sich der Kunststoffring nicht mehr im Nahbereich der Antenne befindet. Ebenso ist der pneumatische Druckausgleich vorteilhaft im Deckel realisiert. Sämtliche Kunststoffteile in unmittelbarer Nähe der Monopolantenne müssen in einem Kunststoffmaterial mit geringer Wasseraufnahme wie z. B. PPS Gf 40 ausgeführt werden.

Der gesamte Pneumatikzylinder zwischen Kolbenstange und rückwärtigem Deckel wird bei dem vorgestellten Verfahren z. B. als Rundhohlleiter betrachtet. Entsprechend den geometrischen Abmessungen des Zylinders wird die Sendefrequenz des Sensors so gewählt, dass eine monomodige Ausbreitung der elektromagnetischen Welle (im Beispiel im E01-Mode) möglich ist. Die Anregung von Hohlleitermoden niedrigerer Ordnung wird durch die Geometrie der Einspeisung verhindert. Die Anregung der elektromagnetischen Welle im Zylinder erfolgt z.B. über einen Monopol (=Antenne) in der vorgestellten Art und Weise. Entsprechend dem Reflektometerprinzip breitet sich die Welle in dem Rundhohlleiter (=Pneumatikzylinder) aus und wird am Kolben (=Kurzschluss) reflektiert. Um die Entfernung zwischen Kolben und Sensor kontinuierlich messen zu können, muss das Sendesignal moduliert werden. Dies kann in Form einer Frequenzmodulation oder durch Auswerten der Phasendifferenz zwischen gesendetem und empfangenem Signal bei mehreren Frequenzen erfolgen. Die Sendefrequenz liegt in der Regel zwischen 100 MHz und 25 GHz.

Weitere vorteilhafte Ausgestaltungen der Erfindung sind Gegenstand der Unteransprüche.

Die Verwendung eines dielektrischen Sekundärrings dient als Anschlagsicherung des sich bewegenden Reflexionskörpers und wurde bei der elektromagnetischen Auslegung des Einspeisesystems berücksichtigt.

Es hat sich als besonders vorteilhaft herausgestellt, wenn die Leitungsstruktur ein Rundhohlleiter, vorzugsweise ein Zylinder mit Kolben, als Reflexionskörper ist. Ein derartiger Rundhohlleiter kann beispielsweise ein Pneumatikzylinder oder ein Hydraulikzylinder sein. Die bislang bestehenden Nachteile sind somit insbesondere für diese Anwendungen ausgeräumt.

Durch das Vorhandensein von Bohrungen in dem Einspeisungsblock, in die das Haltesystem, die Koppelsonde und der koaxiale Einspeisungsbereich einbringbar sind, ist eine einfache Montage gewährleistet und die gesamte Abstandsmessvorrichtung kann nahezu beliebig in bestehende Leitungsstrukturen integriert werden.

Gemäß Anspruch 5 hat es sich als vorteilhaft herausgestellt, wenn die Koppelsonde als Monopol-Anregungssytem ausgelegt ist und die Einspeisung der elektromagnetischen Welle koaxial erfolgt, so dass eine Rundhohlleiterwelle eingespeist werden kann, und über eine mehrstufig koaxiale Transformationsstufe auf den Monopol konvertiert. Über die mehrstufige koaxiale Transformationsstufe, welche eine plane Grundfläche aufweisen kann, auf der mittig ein elektrisch leitender Zylinder vorgesehen ist, und an den sich ein elektrisch leitender Stift als Innenleiter der koaxialen Einspeisung anschließt, wird erreicht, dass die gesamte Einspeisung auf einfache Weise erfolgt.

Das Haltesystem besteht aus Dielektrikum, z. B. Lexan, und dient zur Positionierung der Koppelsonde im Zylinder. Ferner sorgt es für die nötige mechanische Stabilität bei Druckbelastung (z. B. 10 bar im Pneumatikzylinder). In der Serienfertigung lässt sich der Einspeiseblock besonders kostengünstig realisieren, indem das Monopol-Anregungssystem in den Zylinderdeckel eingelegt wird und das dielektrische Haltesystem mittels Kunststoffspritzverfahren dieses mit dem Zylinderdeckel fest verbindet.

Gemäß Anspruch 6 wird eine elektromagnetische Welle im Hochfrequenzbereich zwischen 100 MHz bis 25 GHz eingespeist. In der Abhängigkeit von den Dimensionen bzw. Ausmessungen des als Leitungsstruktur verwendeten Zylinders und Wellenmodus wird eine geeignete Frequenz gewählt, die über der unteren Grenzfrequenz des verwendeten Wellenmodus liegt.

Vorteilhafte Weiterbildungen sind Gegenstand der weiteren Unteransprüche.

Anhand der nachfolgenden Zeichnungen soll eine Ausgestaltung der anmeldungsgemäßen Abstandsmessvorrichtung dargestellt werden.

Fig. 1 zeigt eine Schnittdarstellung der Abstandsmessvorrichtung in einer eingebauten Leitungsstruktur;

Fig. 2 zeigt perspektivisch eine Explosionsdarstellung der anmeldungsgemäßen Abstandsmessvorrichtung (linke Seite) und der anmeldungsgemäßen Abstandsmessvorrichtung im zusammengebauten Zustand (rechte Seite);

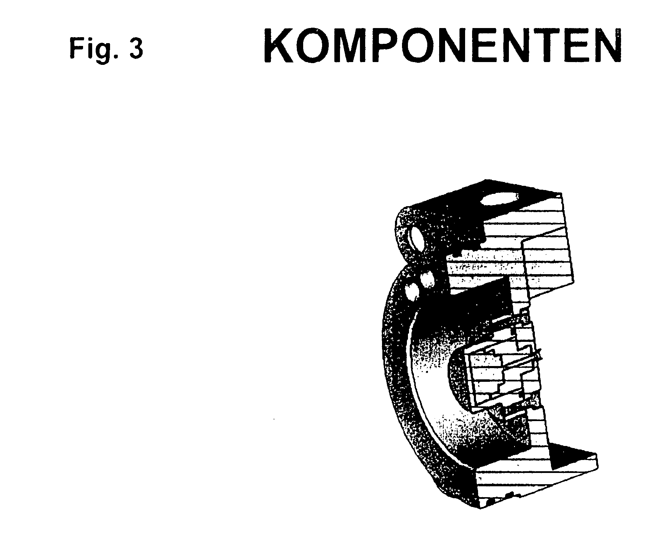

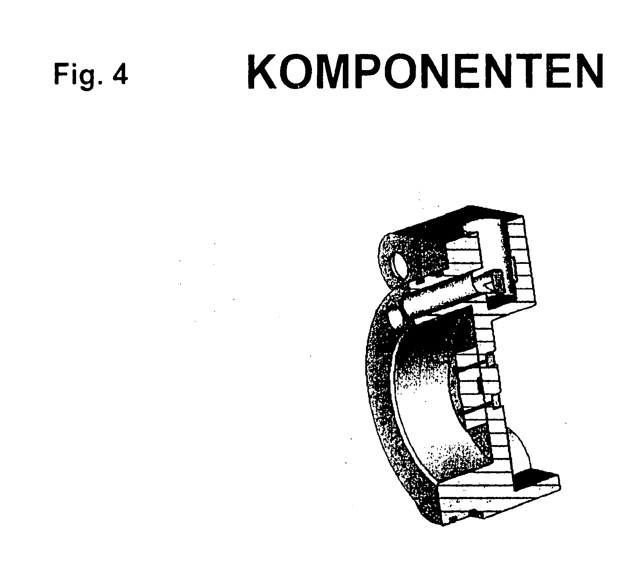

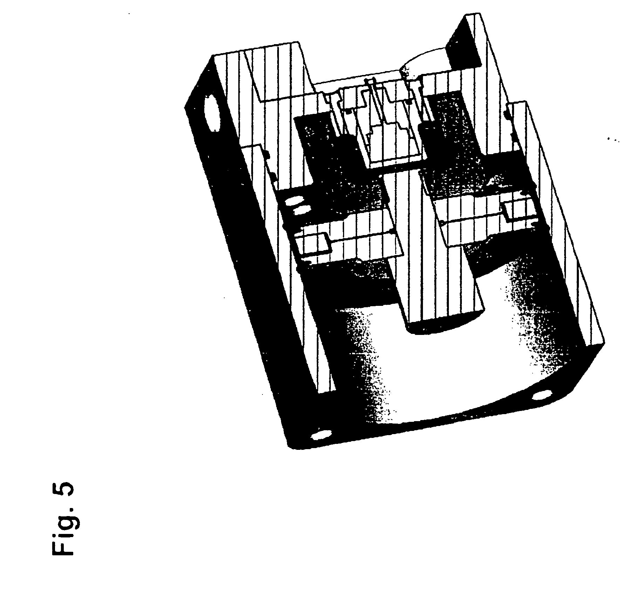

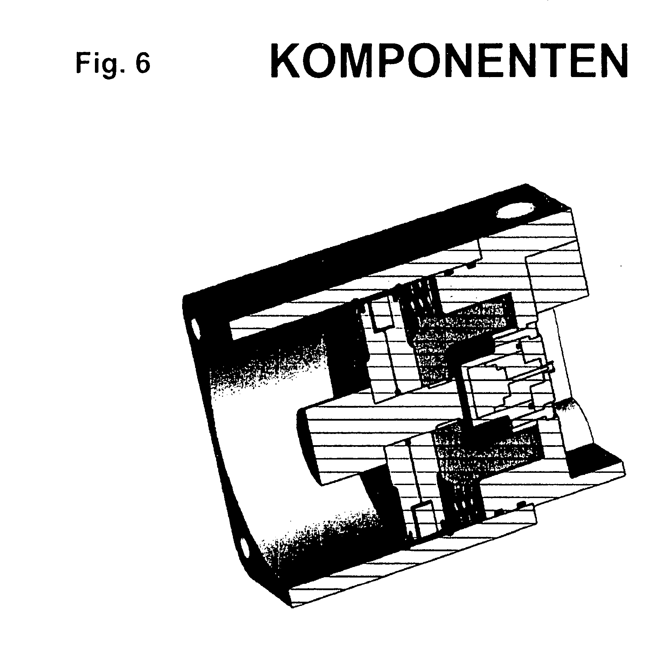

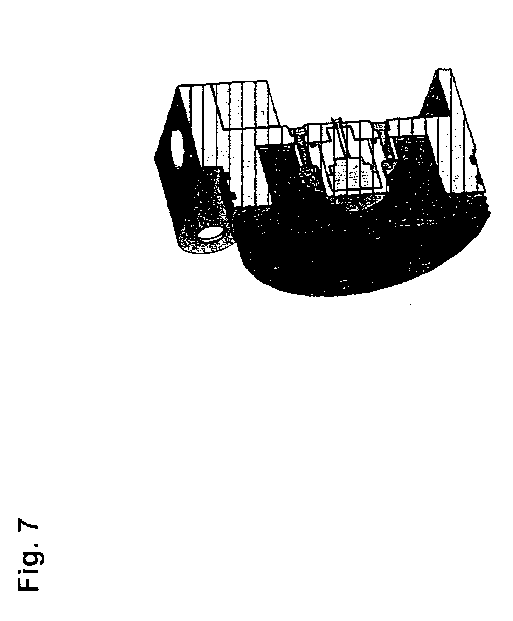

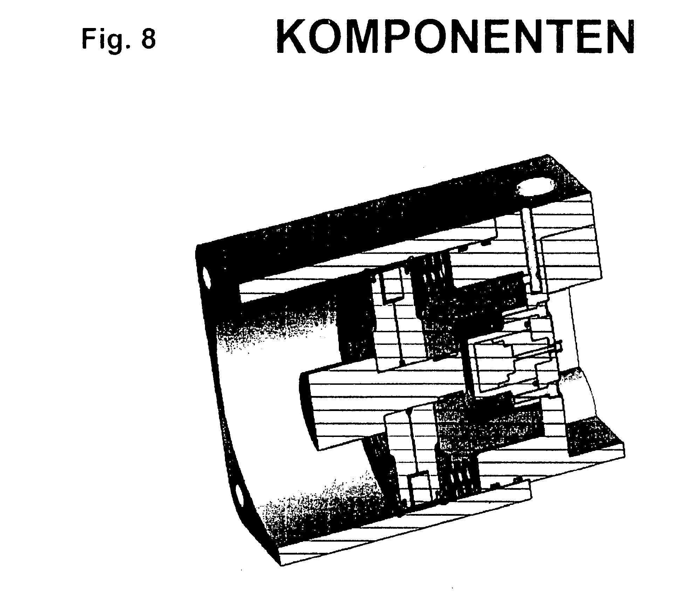

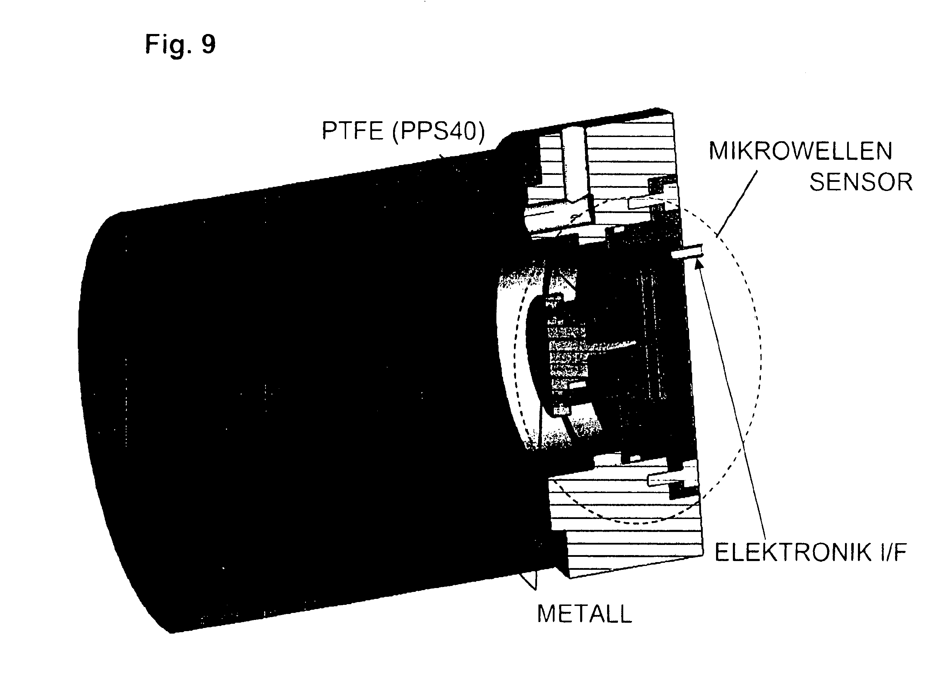

Fig. 3 - 9 zeigen weitere Schnittdarstellungen unterschiedlicher Ausgestaltungen der Abstandsmessvorrichtung;

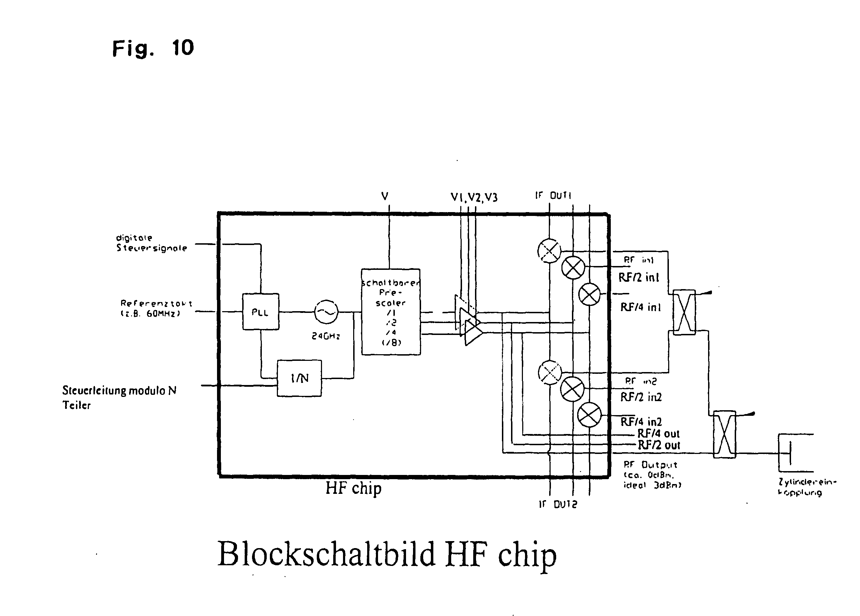

Fig. 10 zeigt ein Blockschaltbild der Auswerteelektronik;

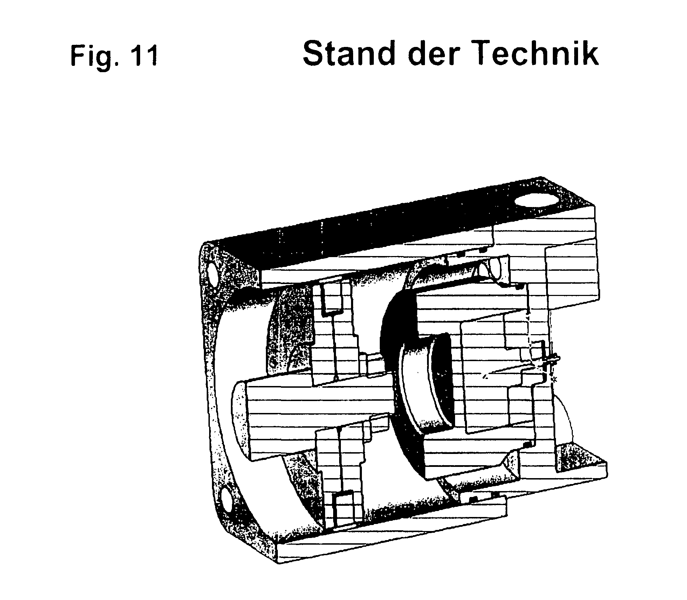

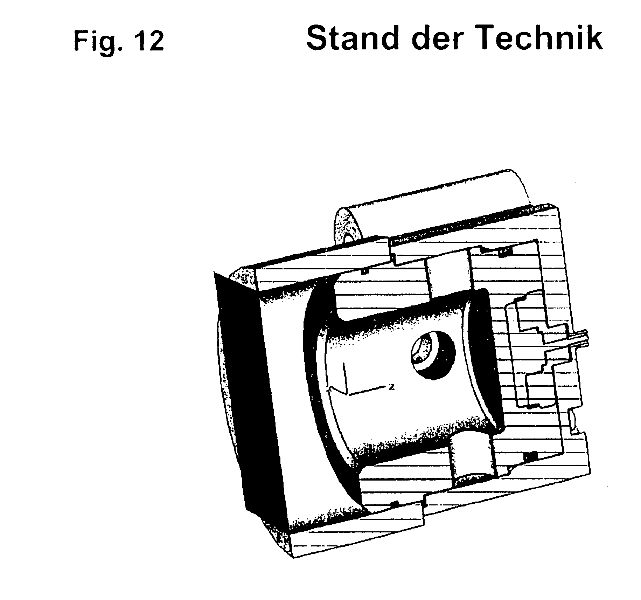

Fig. 11 + 12 zeigen Leitungsstrukturanordnungen gemäß dem Stand der Technik;

Fig. 13 a-d zeigt eine Sequenz des Reflektionskörpers bei einer Endstellung des Reflektionskörpers.

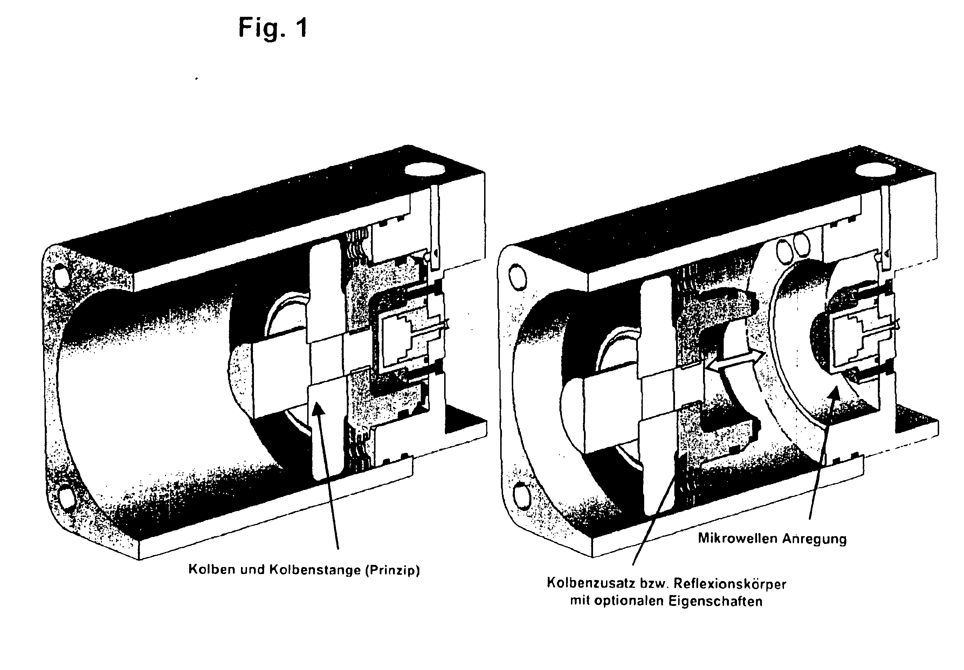

In Fig. 1 ist die anmeldungsgemäße Abstandsmessvorrichtung mit Leitungsstruktur 1 und Einspeiseblock mit Einspeisungsbereich 2 dargestellt, wobei der Einspeisungsbereich eine Koppelsonde 3 über ein dielektrisches Haltesystem 5 mit dem Wellenleiter 7 aufweist. Zusätzlich ist der dielektrische Sekundärring 9 dargestellt, der zum einen als mechanische Anschlagssicherung dient und als sekundäres Anpass- und Abstrahlsystem ausgelegt ist.

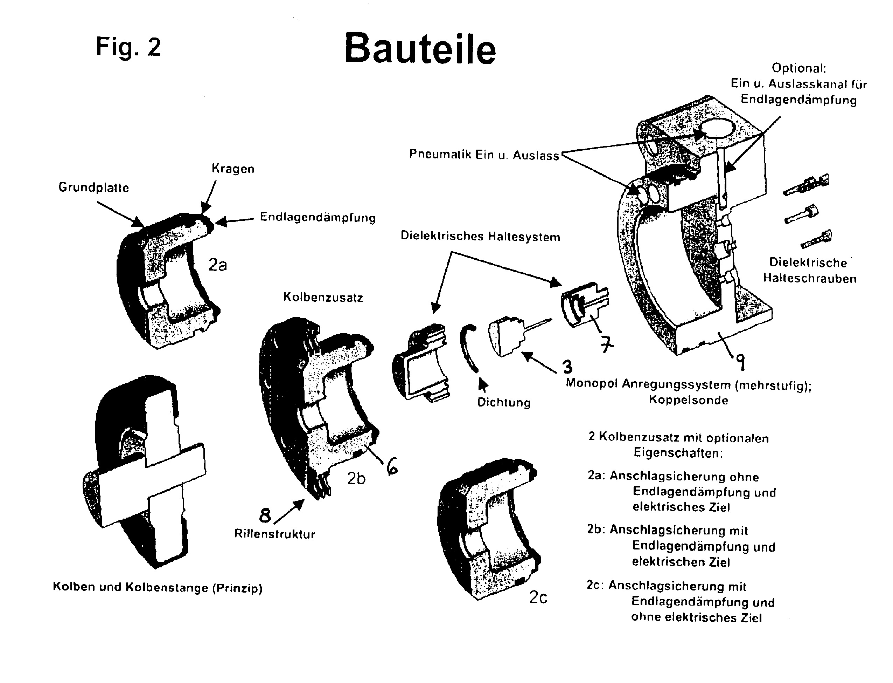

Deutlicher sind die jeweiligen Komponenten der anmeldungsgemäßen Abstandsmessvorrichtung in der Fig. 2 dargestellt, wobei die wesentlichen Komponenten, wie Einspeiseblock mit einem Einspeisungsbereich 2, in Explosionsdarstellung wiedergegeben sind. Deutlich ist ebenso zu erkennen, dass das dielektrische Haltesystem die als Monopol-Anregungssystem ausgestaltete Koppelsonde 3 hält, welche einen Stift enthält, der in einem koaxialen Wellenleiter aufnehmbar ist. Zusätzlich ist der dielektrische Sekundärring 9 dargestellt. Ebenso ist der Reflexionskörper mit aufgesetztem Kragen zur Ausbildung eines becherförmigen Elements dargestellt, dessen Grundplatte vorteilhafterweise eine Rillenstruktur aufweist.

Zum besseren Verständnis soll die Funktionsweise der anmeldungsgemäßen Abstandsmessvorrichtung bzw. des Verfahrens zur Bestimmung des Abstandes klarer erläutert werden.

Das Einspeisesystem besteht aus einem koaxialen Monopol-Anregungssystem. Durch Einspeisung einer transversal elektromagnetischen Welle, d. h. TEM-Welle im koaxialen Einspeisungs- bzw. Eingangsbereich 3 wird durch das Monopolsystem eine Rundhohlleiterwelle mit dem charakteristischen E-Feldtyp der E01-Welle angeregt. Diese Welle breitet sich innerhalb des Laufzylinders in axialer Richtung aus. Trifft diese Welle auf einen Reflexionskörper, d. h. im Pneumatik- und Hydraulikzylinder den Kolben, wird die Welle reflektiert und über die Anregungssektion (Monopol) in das koaxiale Leitungssystem konvertiert und an einen HF-Transceiver (Sende- und Empfangseinheit) weitergeführt. Die Monopoleinspeisung besteht aus einer mehrstufigen koaxialen Transformationsstufe als Koppelsonde 3 mit einem dielektrischen Haltesystem 5, vorzugsweise aus PPS Gf 40 Material, zur Positionierungs- und Druckstabilisierung. Bei Zylindern mit großem Durchmesser kann das dielektrische Haltesystem nur partiell in Form von dielektrischen Stützen ausgeführt werden. Der Kolbenendanschlag ist durch einen becherförmigen Teil 6 z. B. aus Aluminium realisiert, welches als Endstück am Kolben montiert wird. Dabei wird der Becher so ausgeführt, dass die Antenne beim Anschlag berührungslos im Inneren des Bechers eintaucht. Auf der Stirnseite des Bechers ist eine Kunststofflamelle untergebracht um einen sanften Anschlag zu ermöglichen. Dieser Becher dient zusätzlich als Reflexionskörper für die gesendete elektromagnetische Welle. Um ideale Reflexionsbedingungen zu erreichen wurden am Umfang des Reflexionskörpers so genannte "Corregations" 8 realisiert. Dabei handelt es sich um eingefräste Rillen, die für die elektromagnetische Welle einen Kurzschluss darstellen. Je nach Anzahl der Rillen kann damit ein nahezu perfekter Kurzschluss realisiert werden. In der Praxis genügen 2 Rillen. Die Tiefe der Rillen entsprechen ca. einem Viertel der Wellenlänge der verwendeten Sendefrequenz der elektromagnetischen Welle, wenn sich Luft in den Rillen befindet. Die Tiefe der Rillen lässt sich wesentlich verkürzen, wenn diese mit Dielektrikum z. B. Teflon gefüllt werden. In der Praxis wird man dielektrische Ringe einlegen. Eine weitere vorteilhafte Ausführung des Reflexionskörpers besteht darin, dass er so ausgestaltet werden kann, dass man damit die Funktion einer Endlagendämpfung realisieren kann. Ohne Endlagendämpfung würde der Kolben ungebremst auf den Deckel auftreffen. Dies führt zu Erschütterungen und kann Beschädigungen am Antriebssystem verursachen. Die klassische Endlagendämpfung wird dadurch realisiert, dass die Kolbenstange über den Kolben in Richtung Sensor hinausragt und mit einem konisch zulaufenden Kunststoffaufsatz versehen wird. Das Gegenstück im Enddeckel bildet ein Kunststoffring dessen Innendurchmesser gerade so groß ist, dass die Kolbenstange mit konisch zulaufendem Kunststoffaufsatz eintauchen kann. Entspricht der Innendurchmesser des Kunststoffrings jenem des Außendurchmessers des konischen Kolbenstangenaufsatzes, dann wird der Kolben abgebremst. Um dem Zylinder nach einem Abbremsvorgang eine sanfte Anfahrt zu ermöglichen, wird der Kunststoffring im Deckel so gelagert, dass er sich z. B. einige Millimeter axial bewegen kann. Fährt der Kolben nach einem Abbremsvorgang wieder an, dann nimmt er den Kunststoffring bis zu dessen Anschlag mit. Durch die kinetische Energie, die der Kolben dann besitzt, kommt es zu einem sanften Ruck und der Kunststoffring löst sich vom konischen Kunststoffaufsatz der Kolbenstange. Unterstützt wird der Abbremsvorgang durch einen mittels Schraube einstellbaren Luftaustausch zwischen Deckel- und Zylinderraum. Der Nachteil für das HF Wegmesssystem besteht darin, dass die Bewegung des Kunststoffrings im Deckelraum die physikalischen Verhältnisse für den Sensor ändert und sich dadurch die Messgenauigkeit wesentlich verschlechtert. Die klassische Endlagendämpfung lässt sich auch bei der vorgeschlagenen Konfiguration realisieren. Der Kunststoffring sitzt im Deckel und die konische Verlängerung der Kolbenstange wird am Reflexionskörper realisiert. Der Vorteil dieser Lösung besteht darin, dass jetzt die Bewegung des Kunststoffrings durch den Becher maskiert wird, d.h. die Sensorsignale durch das Eintauchen der Antenne in den Becher durch die Bewegung des Kunststoffrings nicht mehr gestört werden. Eine ebenso vorteilhafte Ausführung wird erreicht wenn das Wirkschema umgedreht wird. Der bewegliche Kunststoffring wird jetzt auf der Außenfläche des Bechers montiert und die Deckeleintauchfläche konisch ausgeführt durch Einsetzen eines Kunststoffringes. Die Bewegung des Rings auf dem Reflexionskörper beeinflusst die elektromagnetische Welle nicht, da sich der Kunststoffring nicht mehr im Nahbereich der Antenne befindet.

Sämtliche Kunststoffteile in unmittelbarer Nähe der Monopolantenne müssen in einem Kunststoffmaterial mit geringer Wasseraufnahme wie z. B. PPS Gf 40 ausgeführt werden.

Das anmeldungsgemäße Verfahren soll nunmehr anhand eines Pneumatikzylinders wiedergegeben werden. Hierbei wird der gesamte Pneumatikzylinder zwischen Kolbenstange und rückwärtigem Deckel z. B. als Rundhohlleiter betrachtet. Entsprechend den geometrischen Abmessungen des Zylinders wird die Sendefrequenz des Sensors so gewählt, dass eine monomodige Ausbreitung der elektromagnetischen Welle (im Beispiel im E01-Mode) möglich ist und dass die Anregung von Hohlleiterwellenmoden höherer Ordnung verhindert wird. Die Anregung von Hohlleitermoden niedrigerer Ordnung wird durch die Geometrie der Einspeisung verhindert. Die Anregung der elektromagnetischen Welle im Zylinder erfolgt z.B. über einen Monopol in der vorgestellten Art und Weise. Entsprechend dem Reflektometerprinzip breitet sich die Welle in dem Rundhohlleiter (=Pneumatikzylinder) aus und wird am Kolben (=Kurzschluss) reflektiert. Um die Entfernung zwischen Kolben und Koppelsonde kontinuierlich messen zu können, muss das Sendesignal moduliert werden. Dies kann in Form einer Frequenzmodulation erfolgen. Um hierbei eine hohe Entfernungsauflösung zu erzielen ist jedoch ein großer Frequenzhub erforderlich. In der Praxis vorteilhafter ist das Aussenden eines CW Signals, z. B. bei drei unterschiedlichen Frequenzen (Beispiel: 5.8 GHz, 6.0 GHz, 6.2 GHz) zur Festlegung eines eindeutigen Entfernungsbereiches mit jeweils anschließender Auswertung der Phasendifferenz zwischen Sende- und Empfangssignal als hochgenauen Messwert für die Entfernung zwischen Koppelsonde und Kolben. Die Zahl der zu verwendenden Frequenzen sowie deren Lage ist in erster Linie abhängig vom maximal zu messenden Abstand sowie von der notwendigen Fehlertoleranz gegenüber der Phasenwinkelmessung. Generell ist bei kleiner Frequenzdifferenz zwischen zwei Messfrequenzen der maximal messbare Abstand größer, allerdings bedingt die Unterscheidung zweier aufeinander folgender Perioden eine höhere Genauigkeit der Phasenwinkelmessung als bei größerer Frequenzdifferenz. Die Störsicherheit ist deshalb bei größeren Differenzen zwischen den einzelnen Messfrequenzen höher.

Soll ein großer Messbereich mit ausreichender Störsicherheit gemessen werden, so sind mehrere Messfrequenzen mit geeigneter Frequenzlage notwendig. Dadurch sind dann Frequenzpaare sowohl mit kleiner Differenz der Sendefrequenz (großer Messbereich) als auch mit großer Frequenzdifferenz (Störsicherheit) erforderlich.

Die Positionsgenauigkeit ist im wesentlichen bestimmt durch die Genauigkeit der Phasenwinkelmessung bei der höchsten Messfrequenz, weil dort die Wellenlänge am kleinsten ist. Es gilt die Formel:

$$\text{Wegänderung} = \text{Phasenwinkeländerung} \times \text{Wellenlänge} / 180°$$

Die Kolbenpositionsmessung mittels Mikrowelle beruht auf dem folgenden Prinzip: Eine elektromagnetische Welle geeigneter Frequenz wird in den Zylinder eingekoppelt. Der Zylinder selbst fungiert als Leitungsstruktur für die Welle. Die Welle läuft im Zylinder bis zum Kolben als Reflexionskörper. Am Kolben wird die elektromagnetische Welle größtenteils reflektiert, da sich der Kolben elektrisch ähnlich einem Kurzschluss verhält. Die reflektierte Welle läuft den Zylinder zurück und wird über die selbe Struktur, über die auch die Einkopplung erfolgte, wieder aus dem Zylinder ausgekoppelt. Der Phasenwinkel zwischen dem eingekoppelten und dem reflektierten Signal wird gemessen. Ändert der Kolben seine Position, so ändert sich die Strecke, welche die elektromagnetische Welle im Zylinder zurücklegt. Durch die Streckenänderung kommt es zu einer Änderung der Signallaufzeit und damit auch zu einem anderen Phasenwinkel zwischen hinlaufender und reflektierter Welle. Deshalb kann die Phase zwischen hin- und rücklaufendem Signal als Maß für die Kolbenposition verwendet werden. Es ergibt sich folgender Zusammenhang zwischen Kolbenposition und Phasenwinkel $\varphi$:

$$\varphi = \frac{2x \times 360°}{\lambda} + \varphi_0$$

$\varphi_0$ ist dabei ein Phasenoffset, der hauptsächlich durch die Zuleitung und die Einkopplung bestimmt wird. Er ist konstant und hat daher auf die eigentliche Positionsmessung keinen Einfluss. Aus obiger Gleichung ergibt sich auch die notwendige Phasenmessgenauigkeit um eine vorgegebene Positionsmessgenauigkeit erreichen zu können.

Da bei einer Phasenmessung grundsätzlich nicht zwischen einem Phasenwinkel $\varphi$ und $\varphi$+n*360° unterschieden werden kann, könnten bei der Verwendung von nur einer Frequenz nur Zylinder bis zu einem maximalen Kolbenhub <$\lambda$/2 vermessen werden. Bei Verwendung von zwei oder mehr Frequenzen ist es jedoch möglich, Kolben mit wesentlich größerer Länge zu vermessen. Bei zwei Frequenzen dürfen sich die beiden Wellenlängen nicht zu stark unterscheiden. Für einen Zylinder der Länge l gilt für die Wellenlängen:

$$\lambda_1 > \lambda_2 > \frac{2l\lambda_1}{2l + \lambda_1}$$

Da der Phasenwinkel des reflektierten Signals nicht direkt gemessen werden kann und somit die an einem Mischerausgang gemessene Spannung nicht direkt proportional der Kolbenposition ist, wird für die Positionssuche ein geeigneter Algorithmus benötigt. Da sich das Ausgangssignal periodisch wiederholt, muss vor allem sichergestellt sein, dass die Positionssuche eindeutig verläuft, d.h. es muss eindeutig bestimmbar sein in welcher Periode sich der Kolben befindet. Eine Möglichkeit der Positionsbestimmung wäre die Aufnahme vieler Messwerte während eines Frequenzsweeps. Diese Messwerte werden dann mittels einer FFT oder DFT in den Frequenzbereich transformiert. Aus der Position des Maximums des entstehenden Spektrums lässt sich dann die Position des Kolbens bestimmen. Solange man bei der Aufnahme der Messwerte keine Unterabtastung zulässt, können bei diesem Verfahren keine Mehrdeutigkeitsprobleme auftreten. Auch erhält man durch dieses Verfahren bereits ohne die Aufnahme einer Positionstabelle Werte für die Kolbenpositionen. Nachteilig ist die Tatsache, dass zum einen eine relativ große Zahl von Messpunkten aufgenommen werden muss und dass der Rechenaufwand relativ groß ist.

Eine andere Möglichkeit ist, nur bei wenigen Frequenzen zu messen und die Kolbenposition anhand von Positionstabellen zu bestimmen. Dabei werden einfach die gemessenen Werte mit den Werten der Punkte der Positionstabelle verglichen. Die ermittelte Position entspricht dann dem Tabellenwert, der den Messwerten am ähnlichsten ist. Nachteilig an diesem Verfahren ist, dass es eventuell zu Mehrdeutigkeiten kommen kann. Da eine direkte Phasenmessung nicht durchgeführt wird, kann die Eindeutigkeit nicht durch Einhalten der oben dargestellten Bedingung sichergestellt werden. Genauere Untersuchungen zeigen, dass es bei der Verwendung von nur zwei Messfrequenzen immer Punkte mit identischen Messwerten gibt, wenn der Zylinder länger als $\lambda/2$ ist. Da dies in der Praxis meist der Fall ist, sollte mit mindestens drei Frequenzen gearbeitet werden. Werden die drei Messfrequenzen geschickt gewählt, so gibt es dann keine Positionen mehr, bei denen alle drei Messwerte identisch sind. Allerdings müssen sich in der Praxis die Messwerte an zwei Kolbenpositionen um einen Mindestbetrag unterscheiden, um die Eindeutigkeit auch noch bei gewissen Messfehlern sicherstellen zu können. Daher kann insbesondere bei größeren Zylinderlängen die Nutzung von mehr als drei Frequenzen vorteilhaft sein. Außerdem wird dadurch auch die Messgenauigkeit erhöht, da Rauschen oder Messfehler, die nur bei einer Frequenz auftreten, unterdrückt werden.

Die Sende- Empfangssignale werden in einer entsprechenden HF- Elektronik erzeugt. Dazu wird der Koax-Leiter (= Stift des Monopols) über eine Löt-, Steck oder Bondverbindung mit der Leiterplatte, die die HF-Elektronik trägt, verbunden. Die HF-Elektronik wird als single chip substrat, z.B. in Silizium Germanium ausgeführt. Die Komponenten, die dabei realisiert werden, zeigt Blockschaltbild HF chip. Ein Oszillator (VCO=Voltage controlled oscillator) erzeugt das Hochfrequenzsignal, z. B. bei 24 GHz. Der Oszillator wird über eine Regelschleife in der Frequenz stabilisiert. Hierzu wird das Oszillatorausgangssignal in der Frequenz geteilt, z. B. um Faktor 16 und über eine PLL quarzgenau nachgeregelt. Im Sendezweig befindet sich dann ein schaltbarer Teiler, welcher über das Teilerverhältnis die endgültige Sendefrequenz festlegt. So kann diese bei einer Oszillatorfrequenz von 24 GHz bei 12, 6, 3,...GHz liegen. Entsprechend dem gewählten Teilerverhältnis wird durch externe Beschaltung der frequenzmäßig dazugehörende Leistungsverstärker aktiviert. Anschließend wird das Signal über die Monopolantenne abgestrahlt. Nachdem die elektromagnetische Welle am Reflexionskörper reflektiert wurde, wird sie über die Monopolantenne empfangen und über zwei Richtkoppler an den Empfänger weitergeleitet. Der Empfänger ist als IQ-Empfänger realisiert. Entsprechend der eingestellten Frequenz werden die Zwischenfrequenzen des Empfängers (IF out) analog/digital gewandelt und in einen FPGA (free programmable gate array) ausgewertet. Als Ergebnis erhält man den Entfernungswert zwischen Sensor und Kolben. Dieser wird entweder analog z. B. über eine 0 bis 20 mA oder 0 bis 10V Schnittstelle oder digital, z. B. CAN-Bus, an eine SPS weitergegeben. Im FPGA sind dabei die Funktionsblöcke DSP (digitaler Signalprozessor), Teile des Interface, Speicher und Teile der PLL Ansteuerung realisiert.

Grundsätzlich ist hervorzuheben, dass das Prinzip der Endlagendämpfung umgedreht realisierbar ist, und zwar im Sinne einer kinematischen Umkehr; d. h. der bewegliche Kunststoffring sich im Deckel und der konisch zulaufende Kunststoffzapfen auf der Außenfläche des Bechers befindlich ist.

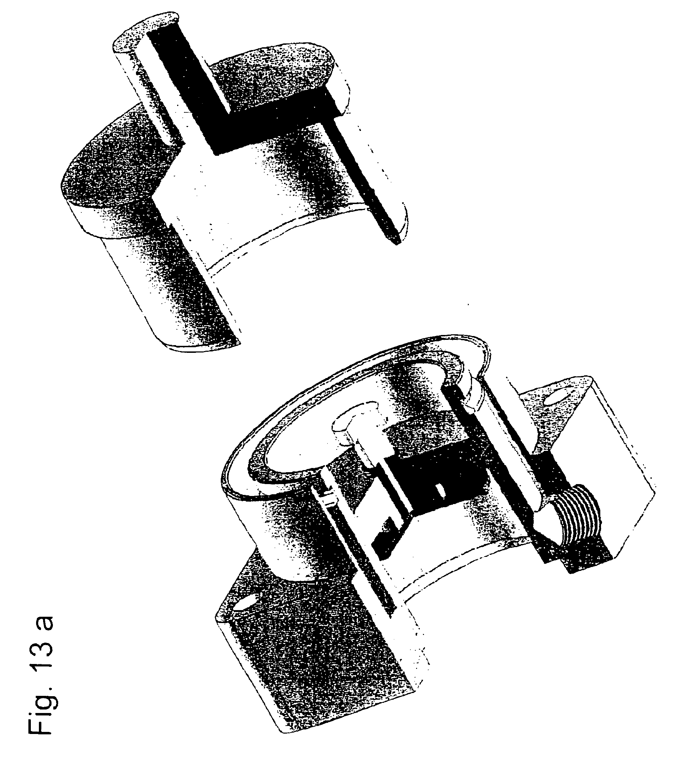

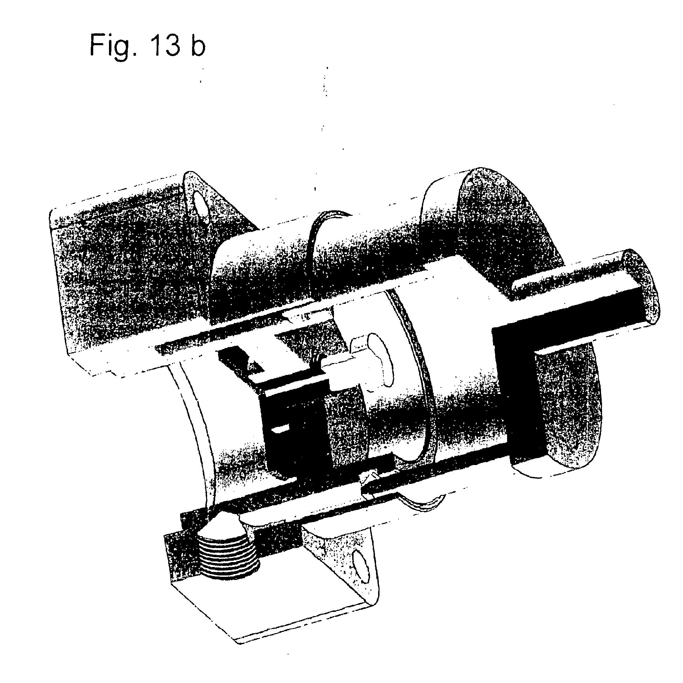

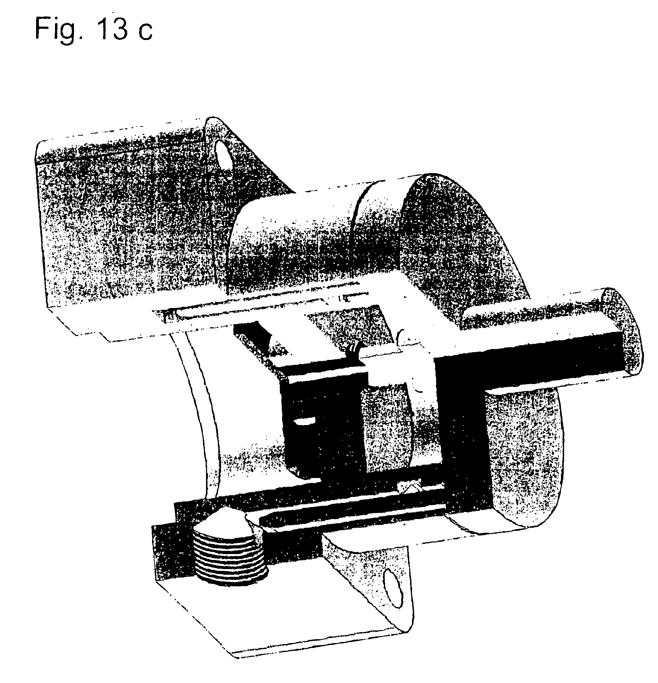

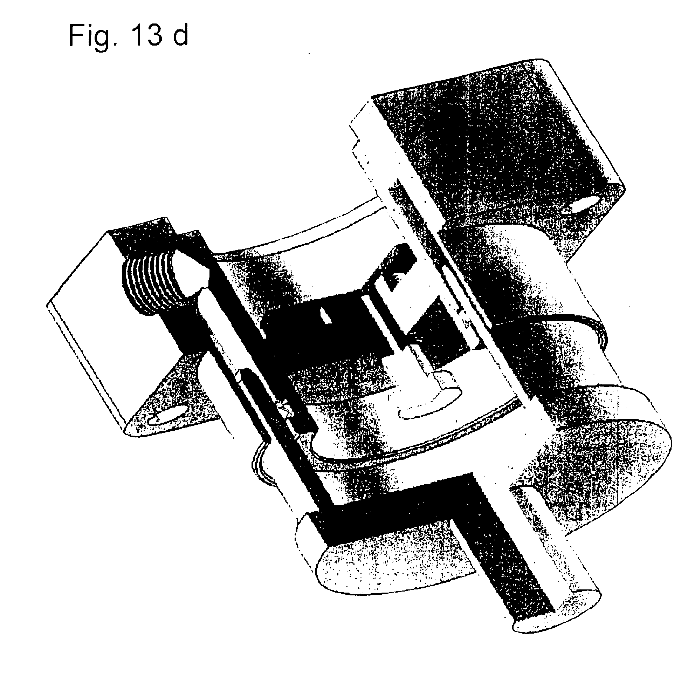

Gemäß Figur 13 a-d wird eine Sequenz des Reflektionskörpers bei einer Endstellung des Reflektionskörpers mit dem Einspeiseblock dargestellt. Hierbei wird vorrangig die Realisierung der pneumatischen Endlagendämpfung bei der Verwendung des integrierten Mikrowellensensors beschrieben, und insbesondere im Gegensatz zu der bisher verbreiteten Realisierung mit zentraler Dämpfung, die nicht möglich ist, da dort die Mikrowellenantenne bzw. die Koppelsonde zur Einspeisung eines Sendesignals sitzt. An dieser Stelle sei hervorgehoben, dass diese Art der Dämpfung allerdings auch für Zylinder ohne Mikrowellensensorik einsetzbar ist.

Der grundsätzliche Aufbau zeigt charakteristisch eine zentral angeordnete Koppelsonde, einen als Becherkolben ausgebildeten Reflektionskörper mit Grundplatte und aufgesetztem Kragen und einen als Ausnehmung im Einspeiseblock vorgesehenen Eintauchbereich des Becherkolbens im Zylinderboden.

Funktionell zeigt Figur 13 a, wie sich der Becherkolben dem Zylinderboden nähert. In Figur 13 b rückt der Kolben in den Eintauchbereich des Zylinderbodens ein und schließt in der Ausnehmung über den Abdichtungsring die Luftdichtung, so dass sich bei weiterer Bewegung des Kolbens ein Überdruck in der Ausnehmung des Einspeiseblocks aufbaut. In Figur 13 c ist eine Momentaufnahme gezeigt, in der der Kolben in den Eintauchbereich der Ausnehmung eingefahren ist und sich der Überdruck im Bereich um die Koppelsonde langsam durch eine ebenfalls vorgesehene Bypassbohrung abbaut. In Figur 13 d wird gezeigt, wie der Becherkolben durch Druckanlegen am Zylinderboden herausgefahren wird und die Luftdichtung sich öffnet. Um die Luftdichtung herum kann Druckluft in den Zylinder strömen und über den gesamten Kolbenbereich Kraft wirken.

**Patentansprüche**

1. Abstandsmessvorrichtung mit einer Auswerteelektronik, einer Sensoreinrichtung, die einen Einspeiseblock umfassend zumindest eine Koppelsonde (3) zur Einspeisung eines Sendesignals in eine Leitungsstruktur aufweist, und mit einem in der Leitungsstruktur angeordneten Reflexionskörper, welcher eine Grundplatte mit aufgesetztem Kragen zur Ausbildung eines becherförmigen Elements (6) aufweist, wobei der Einspeiseblock mit einer Ausnehmung, vorzugsweise ringförmigen Ausnehmung, vorgesehen ist, in die der Kragen eintaucht, wobei die Ausnehmung einen Abdichtungsring aufweist, der mit dem Kragen eine Luftdichtigkeit herstellt,
**dadurch gekennzeichnet, dass**
der aufgesetzte Kragen stirnseitig mit einer Kunststofflamelle ausgestattet ist, um einen sanften Anschlag zu ermöglichen.

2. Abstandsmessvorrichtung nach Anspruch 1, wobei der aufgesetzte Kragen die Koppelsonde (3) in einer Endstellung des Reflexionskörpers umfasst, und vorzugsweise in der Stirnfläche der Grundplatte eine Rillenstruktur vorgesehen ist, die vorzugsweise in Umfangsrichtung verläuft, und vorzugsweise die Rillenstruktur mindestens zwei Rillen aufweist, vorzugsweise 3 oder mehr Rillen aufweist, und vorzugsweise die Rillen mit dielektrischem Material gefüllt sind, und vorzugsweise zur Bereitstellung einer Endlagendämpfung ein Ringelement, vorzugsweise Kunststoffring, vorgesehen ist, welches den Kragen in der Endstellung umfasst, und vorzugsweise zur Bereitstellung einer Endlagendämpfung ein Ringelement, vorzugsweise Kunststoffring, vorgesehen ist, welches an der Außenoberfläche des Kragens vorgesehen ist und eine zu der Au ßenoberfläche des Kragens entsprechende Flächenpaarung hat, die vorzugsweise konisch verläuft.

3. Abstandsmessvorrichtung nach einem der Ansprüche 1 oder 2, wobei die Leitungsstruktur einen Einspeiseblock mit einem Einspeisungsbereich (2) aufweist, der einen HF-Transceiver über einen Wellenleiter mit dielektrischem Haltesystem mit der Koppelsonde (3) verbindet, und vorzugsweise das dielektrische Haltesystem aus einem Material mit geringer Wasseraufnahme bzw. Abgabe besteht und sowohl massiv als auch in einzelnen Stützen bei Zylindern mit großem Durchmesser ausgeführt werden kann, und vorzugsweise die Leitungsstruktur ein Rundhohlleiter, vorzugsweise ein Zylinder mit Kolben als Reflexionskörper, ist, und vorzugsweise der Reflexionskörper auf den Kolben aufgesetzt ist.

4. Abstandsmessvorrichtung nach einem der Ansprüche 1 bis 3, wobei ein pneumatischer Druckausgleich vorgesehen ist, und vorzugsweise der Einspeisungsblock Bohrungen aufweist, in die das Haltesystem, die Koppelsonde und ein koaxialer Einspeisungsbereich einbringbar sind.

5. Abstandsmessvorrichtung nach einem der Ansprüche 1 bis 4, wobei die Koppelsonde als Monopol-Anregungssystem ausgelegt ist, und die Einspeisung der elektromagnetischen Welle koaxial erfolgt und über eine mehrstufige koaxiale Transformationsstufe auf dem Monopol konvertiert wird, und vorzugsweise die Koppelsonde als ein dreistufiges Transformationsmodul ausgelegt ist, das eine plane Grundfläche aufweist, auf der mittig ein Zylinder vorgesehen ist, an den sich ein Stift anschließt, über den der Einspeisungsbereich (2) mit der Koppelsonde verbunden ist, und vorzugsweise die Koppelsonde (3) von einem Kunststoff überzogen ist, vorzugsweise ein Kunststoff mit geringer Wasseraufnahme und Wasserabgabe, z. B. PPS Gf 40.

6. Abstandsmessvorrichtung nach einem der Ansprüche 1 bis 5, wobei über die Koppelsonde (3) das Sendesignal als eine elektromagnetische Welle im Hochfrequenzbereich eingespeist wird, und vorzugsweise die elektromagnetische Welle im Hochfrequenzbereich zwischen 100 MHz bis 25 GHz eingespeist wird, und vorzugsweise über die Koppelsonde (3) mindetens zwei Sendesignale als elektromagnetischen Wellen mit unterschiedlicher Frequenz ausgestrahlt werden, und vorzugsweise die eingekoppelte elektromagnetische Welle eine monomodige Ausbreitung aufweist, und zwar vorzugsweise im TEM-Mode bei koaxialer Struktur, und vorzugsweise die eingekoppelte elektromagnetische Welle eine monomodige Ausbreitung aufweist, und zwar vorzugsweise im E01-Mode beim Rundhohlleiter.

7. Abstandsmessvorrichtung nach einem der Ansprüche 1 bis 6, wobei die Sensoreinrichtung eine Hochfrequenz-Elektronik mit einem Sende- und Empfangszweig aufweist, und/oder vorzugsweise die Auswerteelektronik und/oder die Sensoreinrichtung, vorzugsweise als Interfaceelektronik, in einer Chipanordnung vorgesehen ist, die vorzugsweise am Einspeiseblock vorgesehen ist, und vorzugsweise die Hochfrequenzelektronik bestehend aus PLL, Oszillator bzw. VCO, Mischer, Frequenzverteilern und Verstärkern auf einem gemeinsamen Substrat als single chip Lösung integriert sind.

8. Abstandsmessvorrichtung nach Anspruch 7, wobei es sich bei dem Substratmaterial um Silizium-Germanium, Silizium, Silizium-Germanium-Karbid oder Silizium-Karbid handelt, und/oder vorzugsweise die Sende- und Empfangsfrequenz der Chipanordnung durch Einstellen des Teilerverhältnisses beispielsweise durch Anlegen einer externen Spannung, in diskreten Schritten, vorzugsweise in 2-er Schritten wählbar ist, und/oder vorzugsweise die Auswerteelektronik bestehend aus DSP, PLL, d. h. als Speicher als FPGA free programmable gate array realisiert ist, und vorzugsweise die Interfaceelektronik sowohl analog z. B. 0 bis 20mA, 0 bis 10V als auch digital z. B. als CAN-Bus realisiert ist und Teile des FPGA belegt zur Erzeugung des Interfaceprotokolls bzw. Ansteuerung des Digital/Analogwandels, und/oder vorzugsweise eine Bypassbohrung in dem Einspeiseblock vorgesehen ist.

9. Verfahren zur Bestimmung eines Abstandes, unter Verwendung einer Abstandsmessvorrichtung nach einem der Ansprüche 1 bis 8, welches die Schritte aufweist: Bereitstellen einer Leitungsstruktur, die einen Einspeisungsblock mit einem Einspeisungsbereich (2) aufweist, der einen HF-Transceiver über einen Wellenleiter mit dielektrischem Haltesystem (5) mit der Koppelsonde (3) verbindet, und Bereitstellen eines Reflexionskörpers mit einer Grundplatte mit aufgesetztem Kragen zur Ausbildung eines becherförmigen Elements (6), sowie Messen des Abstandes zwischen dem von der Koppelsonde (3) definierten Einspeisepunkt und dem Reflexionskörper, wobei mindestens zwei Sendesignale als elektromagnetische Wellen mit unterschiedlicher Frequenz über die Koppelsonde eingekoppelt, vorzugsweise ausgestrahlt und empfangen, werden.

10. Verfahren nach Anspruch 9, wobei das Messen des Abstandes durch eine jeweilige Auswertung der Phasendifferenz zwischen dem Sendesignal und dem Empfangssignal der elektromagnetischen Welle erfolgt, und vorzugsweise die Differenz bei mindestens zwei Sendefrequenzen der jeweiligen elektromagnetischen Welle klein, vorzugsweise 1% des Absolutwertes, ist, um einen großen Messbereich abzudecken, und vorzugsweise die Differenz in den Frequenzen des Sendesignals der jeweiligen elektromagnetischen Welle groß, vorzugsweise 20% des Absolutwertes, ist, um eine große Störsicherheit zu erzielen.

11. Verfahren nach einem der Ansprüche 9 oder 10, wobei die Sendesignale kontinuierlich ausgestrahlt werden, und/oder vorzugsweise drei Sendesignale als elektromagnetische Wellen über die Koppelsonde ausgestrahlt werden, und/oder vorzugsweise ein Einspeiseblock mit einer Ausnehmung, vorzugsweise ringförmigen Ausnehmung, vorgesehen ist, in die der Kragen eintaucht, und/oder vorzugsweise die Ausnehmung einen Abdichtungsring aufweist, der mit dem Kragen eine Luftdichtigkeit bereitstellt, und/oder vorzugsweise eine Bypassbohrung in dem Einspeiseblock vorgesehen ist.

## Claims

1. A distance measuring device comprising analysis electronics, a sensor device which, including a feed block, has at least one coupling probe (3) for feeding a transmission signal into a conducting structure, and comprising a reflective member arranged in the conducting structure which has a base plate with an attached collar forming a cup-shaped element (6), the feed block being provided with a recess, preferably an annular recess, into which the collar plunges, the recess having a sealing ring that produces airtightness with the collar, **characterised in that** the attached collar is equipped on the front face with a plastic plate so as to enable gentle impact.

2. The distance measuring device according to Claim 1, the attached collar comprising the coupling probe (3) in an end position of the reflective member, and a groove structure, which preferably extends in circumferential direction, preferably being provided in the front face of the base plate and the groove structure preferably having at least two grooves, preferably 3 or more grooves, and the grooves preferably being filled with dielectric material, and an annular element, preferably a plastic ring, preferably being provided in order to provide end position damping, which annular element encompasses the collar in the end position and is preferably provided in order to provide an annular element, preferably a plastic ring, for end position damping, which annular ring is provided on the outer surface of the collar and has a surface pairing corresponding to the outer surface of the collar and which preferably extends conically.

3. The distance measuring device according to either of Claims 1 or 2, the line structure having a feed block with a feed region (2) which connects an HF transceiver to a dielectric restraint system with the coupling probe (3) via a waveguide and the dielectric restraint system preferably being made of a material with low water absorption and release and being able to be made both solidly and in individual supports with cylinders with a large diameter, and the conducting structure preferably being a circular hollow conductor, preferably a cylinder with a piston as a reflective member, and the reflective member preferably being attached to the piston.

4. The distance measuring device according to any of Claims 1 to 3, pneumatic compensation being provided, and the feed block preferably having boreholes into which the restraint system, the coupling probe and a coaxial feed region can be inserted.

5. The distance measuring device according to any of Claims 1 to 4, the coupling probe being designed as a monopole stimulation system, and the feed of the electromagnetic wave taking place coaxially and being converted to the monopole via a multistep coaxial transformation stage, and the coupling probe preferably being designed as a three-step transformation module that has a level base on the centre of which a cylinder is provided to which a pin is attached via which the feed region (2) is connected to the coupling probe, and the coupling probe (3) preferably being covered by a plastic, preferably a plastic with low water absorption and water release, e.g. PPS Gf 40.

6. The distance measuring device according to any of Claims 1 to 5, the transmission signal being fed in the high frequency range as an electromagnetic wave via the coupling probe (3) and the electromagnetic wave preferably being fed in the high frequency range between 100 MHz and 25 GHz, and preferably at least two transmission signals being radiated via the coupling probe (3) as electromagnetic waves with different frequencies, and the coupled electromagnetic wave preferably having monomodal propagation, preferably in the TEM mode with a coaxial structure, and the coupled electromagnetic wave preferably having monomodal propagation, preferably in the E01 mode with the circular hollow conductor.

7. The distance measuring device according to any of Claims 1 to 6, the sensor device having high frequency electronics with a transmitting and receiving branch and/or preferably the analysis electronics and/or the sensor device, preferably being provided as interface electronics in a chip arrangement which is preferably provided on the feed block, and the high frequency electronics preferably consisting of a PLL, an oscillator or as a VCO, a mixer, frequency distributors and amplifiers being integrated onto a common substrate as a single chip solution.

8. The distance measuring device according to Claim 7, the substrate material being silicium germanium, silicium, silicium germanium carbide or silicium carbide, and/or the transmitting and receiving frequency of the chip arrangement being selectable by adjusting the divider ration, for example by applying an external voltage in discrete steps, preferably in steps of 2, and/or the analysis electronics preferably consisting of a DSP, a PLL, a memory being implemented as a FPGA, i.e. as a Free Programmable Gate Array, and the interface electronics preferably being implemented with analogue operations e.g. 0 to 20 mA, 0 to 10V and with digital operations e.g. as a CAN-Bus, and portions of the FPGA being allocated to the generation of the interface protocol and control of the digital to analogue conversion and/or a bypass borehole preferably being provided in the feed block.

9. A method for determining a distance using a distance measuring device according to any of Claims 1 to 8 comprising the steps: providing a conducting structure which has a feed block with a feed region (2) which connects an HF transceiver to a dielectric restraint system (5) with the coupling probe (3) via a waveguide, and providing a reflective member with a base plate with an attached collar for forming a cup-shaped element (6) and measuring the distance between the feed point defined by the coupling probe (3) and the reflective member, at least two transmission signals being coupled, preferably radiated and received, as electromagnetic waves with different frequencies, via the coupling probe.

10. The method according to Claim 9, the distance being measured by respectively analysing the phase difference between the transmitted signal and the received signal of the electromagnetic wave, and the difference with at least two transmission frequencies of the respective electromagnetic wave being small, preferably 1% of the absolute value, in order to cover a large measuring range, and the difference in the frequencies of the transmission signal of the respective electromagnetic wave preferably being large, preferably 20% of the absolute value, in order to achieve a large interference resistance.

11. The method according to either of Claims 9 or 10, the transmission signals being continuously radiated and/or three transmission signals preferably being radiated via the coupling probe as electromagnetic waves and/or a feed block preferably being provided with a recess, preferably an annular recess, into which the collar plunges, and/or the recess preferably having a sealing ring which provides airtightness with the collar and/or a bypass borehole preferably being provided in the feed block.

**Revendications**

1. Dispositif de mesure de distance qui comporte une électronique d'évaluation, un dispositif de détection présentant, en comprenant un bloc d'injection, au moins une sonde de couplage (3) destinée à injecter un signal d'émission dans une structure conductrice, et qui comporte un corps réflecteur agencé dans la structure conductrice, lequel corps réflecteur présente une plaque de base à collet rapporté formant un élément (6) en forme de godet, le bloc d'injection étant pourvu d'un évidement, de préférence un évidement annulaire dans lequel pénètre le collet, l'évidement présentant un anneau d'étanchéité assurant, avec le collet, une étanchéité à l'air, **caractérisé en ce que** le collet rapporté est pourvu, sur sa face frontale, d'une lamelle de plastique pour offrir une butée souple.

2. Dispositif de mesure de distance selon la revendication 1, dans lequel le collet rapporté englobe la sonde de couplage (3) dans une position terminale du corps réflecteur, et il est prévu une structure rainurée de préférence dans la surface frontale de la plaque de base, laquelle structure s'étend de préférence dans la direction circonférentielle, et de préférence la structure rainurée présente au moins deux rainures, de préférence 3 rainures ou plus, et les rainures sont de préférence remplies d'une matière diélectrique, et il est prévu de préférence, pour créer un amortissement de fin de course, un élément d'anneau, de préférence un anneau de plastique, qui englobe le collet dans la position terminale, et il est prévu de préférence, pour créer un amortissement de fin de course, un élément d'anneau, de préférence un anneau de plastique, lequel élément d'anneau est prévu sur la surface extérieure du collet et possède un appariement de surface coïncidant avec la surface extérieure du collet en s'étendant de préférence de manière conique.

3. Dispositif de mesure de distance selon l'une des revendications 1 ou 2, dans lequel la structure conductrice présente un bloc d'injection comportant une zone d'injection (2) reliant un émetteur-récepteur haute fréquence à la sonde de couplage (3) par le biais d'un guide d'ondes pourvu d'un système de maintien diélectrique, et de préférence le système de maintien diélectrique est constitué dans un matériau à faible absorption et faible déperdition d'eau, et peut être conçu massif de même qu'en supports distincts pour des cylindres de grand diamètre, et de préférence la structure conductrice est un guide d'ondes circulaire, de préférence un cylindre pourvu d'un piston comme corps réflecteur, et de préférence le corps réflecteur est appliqué sur le piston.

4. Dispositif de mesure de distance selon l'une des revendications 1 à 3, dans lequel il est prévu une compensation de pression pneumatique, et de préférence le bloc d'injection présente des perforations dans lesquelles le système de maintien, la sonde de couplage et une zone d'injection coaxiale peuvent être introduits.

5. Dispositif de mesure de distance selon l'une des revendications 1 à 4, dans lequel la sonde de couplage est conçue sous la forme d'un système d'excitation par monopôle, et l'injection de l'onde électromagnétique se produit de manière coaxiale et est convertie sur le monopôle par l'intermédiaire d'une étape de transformation coaxiale à plusieurs étages, et de préférence la sonde de couplage est conçue sous la forme d'un module de transformation à trois étages présentant une surface de base plane au centre de laquelle est prévu un cylindre auquel est adjointe une tige par l'intermédiaire de laquelle la zone d'injection (2) est reliée à la sonde de couplage, et de préférence la sonde de couplage (3) est recouverte d'une matière plastique, de préférence une matière plastique à faible absorption et faible déperdition d'eau, par exemple du PPS Gf 40.

6. Dispositif de mesure de distance selon l'une des revendications 1 à 5, dans lequel le signal d'émission est injecté, par l'intermédiaire de la sonde de couplage (3), sous la forme d'une onde électromagnétique dans la plage des hautes fréquences, et de préférence l'onde électromagnétique est injectée dans la plage des hautes fréquences entre 100 MHz et 25 GHz, et de préférence au moins deux signaux d'émission sont émis par l'intermédiaire de la sonde de couplage (3) sous la forme d'ondes électromagnétiques de fréquences différentes, et de préférence l'onde électromagnétique injectée présente une propagation monomodale, à savoir de préférence en mode TEM pour une structure coaxiale, et de préférence l'onde électromagnétique couplée présente une propagation monomodale, à savoir de préférence en mode E01 pour le guide d'ondes circulaire

7. Dispositif de mesure de distance selon l'une des revendications 1 à 6, dans lequel le dispositif de détection présente une électronique haute fréquence pourvue d'une branche d'émission et de réception, et/ou de préférence l'électronique d'évaluation et/ou le dispositif de détection sont prévus, de préférence sous la forme d'une électronique d'interface, dans un dispositif à puce de préférence prévu au niveau du bloc d'injection, et de préférence l'électronique haute fréquence, composée de boucle à verrouillage de phase (PLL), oscillateur ou VCO, mélangeur, répartiteur de fréquence et amplificateurs, est intégrée sur un substrat commun sous la forme d'une solution à puce unique.

8. Dispositif de mesure de distance selon la revendication 7, dans lequel le matériau du substrat est du silicium-germanium, silicium, silicium-germanium-carbure ou siliciumcarbure, et/ou de préférence la fréquence d'émission et de réception du dispositif à puce est sélectionnable par réglage du facteur d'échelle par exemple par application d'une tension externe, par étapes discrètes, de préférence par étapes de deux, et/ou de préférence l'électronique d'évaluation, composée de processeur de signal numérique (DSP), PLL, mémoire, est réalisée sous la forme d'un FPGA, c'est-à-dire sous la forme d'un free programmable gate array, et de préférence l'électronique d'interface est réalisée sous forme analogique, par exemple 0 à 20 mA, 0 à 10 V, de même que sous forme numérique, par exemple sous la forme d'un bus CAN, et constitue des parties du FPGA pour produire le protocole d'interface ou la commande de la conversion numérique/analogique, et/ou de préférence il est prévu un orifice de dérivation dans le bloc d'injection.

9. Procédé de détermination d'une distance, mettant en oeuvre un dispositif de mesure de distance selon l'une des revendications 1 à 8, comprenant les étapes consistant à : mettre à disposition une structure conductrice présentant un bloc d'injection comportant une zone d'injection (2), reliant un émetteur-récepteur haute fréquence à la sonde de couplage (3) par le biais d'un guide d'ondes pourvu d'un système de maintien diélectrique (5), et mettre à disposition un corps réflecteur présentant une plaque de base à collet rapporté pour former un élément (6) en forme de godet, ainsi qu'à mesurer la distance entre le point d'injection défini par la sonde de couplage (3) et le corps réflecteur, au moins deux signaux d'émission étant couplés, de préférence émis et reçus, sous la forme d'ondes électromagnétiques de fréquences différentes par l'intermédiaire de la sonde de couplage.

10. Procédé selon la revendication 9, dans lequel la mesure de la distance s'effectue par évaluation respective de la différence de phase entre le signal d'émission et le signal de réception de l'onde électromagnétique, et de préférence la différence pour au moins deux fréquences d'émission de l'onde électromagnétique respective est faible, correspondant de préférence à 1 % de la valeur absolue, pour couvrir une plage de mesure importante, et de préférence la différence pour les fréquences du signal d'émission de l'onde électromagnétique respective est importante, correspondant de préférence à 20 % de la valeur absolue, pour obtenir une immunité au bruit élevée.

11. Procédé selon l'une des revendications 9 ou 10, dans lequel les signaux d'émission sont émis en continu, et/ou de préférence trois signaux d'émission sont émis sous la forme d'ondes électromagnétiques par l'intermédiaire de la sonde de couplage, et/ou de préférence un bloc d'injection est pourvu d'un évidement, de préférence un évidement annulaire dans lequel pénètre le collet, et/ou de préférence l'évidement présente un anneau d'étanchéité assurant, avec le collet, une étanchéité à l'air, et/ou de préférence un orifice de dérivation est prévu dans le bloc d'injection.

# Fig. 1

Kolben und Kolbenstange (Prinzip)

Mikrowellen Anregung

Kolbenzusatz bzw. Reflexionskörper
mit optionalen Eigenschaften

EP 2 142 810 B1

# Fig. 2

# Bauteile

Optional:
Ein u. Auslasskanal für
Endlagendämpfung

Pneumatik Ein u. Auslass

Kragen

Grundplatte

Endlagendämpfung

2a

Dielektrisches Haltesystem

Dielektrische
Halteschrauben

Kolbenzusatz

7

3

Dichtung

9

Monopol Anregungssystem (mehrstufig);
Koppelsonde

6

2b

8

Rillenstruktur

2c

Kolben und Kolbenstange (Prinzip)

2 Kolbenzusatz mit optionalen
Eigenschaften:

2a: Anschlagsicherung ohne
Endlagendämpfung und
elektrisches Ziel

2b: Anschlagsicherung mit
Endlagendämpfung und
elektrischen Ziel

2c: Anschlagsicherung mit
Endlagendämpfung und
ohne elektrisches Ziel

EP 2 142 810 B1

KOMPONENTEN

Fig. 3

Fig. 4 **KOMPONENTEN**

EP 2 142 810 B1

Fig. 5

KOMPONENTEN

Fig. 6

Fig. 7

KOMPONENTEN

Fig. 8

**Fig. 9**

PTFE (PPS40)

MIKROWELLEN SENSOR

ELEKTRONIK I/F

METALL

EP 2 142 810 B1

# Fig. 10

**Blockschaltbild HF chip**

222222222222222222222222

2222222

222

Stand der Technik

Fig. 11

Stand der Technik

Fig. 12

Fig. 13 a

Fig. 13 b

Fig. 13 c

EP 2 142 810 B1

Fig. 13 d

# EP 2 142 810 B1

**IN DER BESCHREIBUNG AUFGEFÜHRTE DOKUMENTE**

**In der Beschreibung aufgeführte Patentdokumente**

- WO 10205904 A
- US 4588953 A